# EUROPÄISCHE PATENTSCHRIFT

(11) **EP 1 672 364 B1**
(45) Veröffentlichungstag und Bekanntmachung des Hinweises auf die Patenterteilung: **13.02.2013**
(21) Anmeldenummer: 05022049.0
(22) Anmeldetag: 10.10.2005
(51) Int. Cl.: G01N 27/327

(54) **Analysesystem zur Analyse einer flüssigen Probe auf einem analytischen Testelement**
Analytical system for analysis of a liquid sample by means of a test element.
Système d`analyse pour analyser un échantillon de liquide avec un elément d`éssai

(30) Priorität: 15.12.2004 DE 102004060322
(43) Veröffentlichungstag der Anmeldung: 21.06.2006
(73) Patentinhaber: F. Hoffmann-La Roche AG, 4070 Basel (CH); Roche Diagnostics GmbH, 68305 Mannheim (DE)
(72) Erfinder: Riebel, Stefan, 76756 Bellheim (DE); Thoes, Bruno Robert, 66287 Quierscheid (DE); Augstein, Manfred, 68305 Mannheim (DE); Wieder, Herbert, 68259 Mannheim (DE); Bainczyk, Gregor, 68199 Mannheim (DE)
(74) Vertreter: Stößel, Matthias

(56) Entgegenhaltungen:
- EP-A- 1 480 037
- EP-A1- 1 118 856
- WO-A-01/71328
- WO-A-03/085392
- WO-A-2004/005919
- JP-A- 2003 042 994
- US-A- 5 502 396

## Beschreibung

Die vorliegende Erfindung betrifft ein Analysesystem und ein Verfahren zum elektrischen Anschliessen einer Kontaktfläche eines Testelements.

Analysesysteme, die es gestatten, einzelne Parameter in Probenflüssigkeiten zu bestimmen, sind seit geraumer Zeit bekannt und in einer großen Vielfalt kommerziell erhältlich. Insbesondere für den Bereich der medizinischen Diagnostik und der Umweltanalytik werden Geräte angeboten, die auch von wenig geschulten Personen bedient werden können. Einfach zu bedienen sind solche Systeme, die ohne die Verwendung von flüssigen Reagenzien arbeiten und bei denen im Allgemeinen keine oder zumindest keine aufwendige Vorbereitung des Probenmaterials notwendig ist. Für solche sogenannte Schnelltests wurde eine "Trockenchemie" entwickelt, bei der als Lösungsmittel allein die in der Probenflüssigkeit enthaltene Flüssigkeit dient.

Für die Bestimmung von Glukose in Blut sind beispielsweise Systeme gebräuchlich, bei denen der Patient eine geringe Menge Blut auf ein Testelement aufgibt und die Messung mit einem einfach zu bedienenden Gerät durchführt.

Herkömmliche Analysegeräte besitzen eine Öffnung, beispielsweise einen Schlitz, in den ein Testelement von Hand eingeschoben werden kann. Führungselemente stellen sicher, dass ein Testelement in der vorgesehenen Orientierung eingeschoben wird. Um die gewünschte Positionierung des Testelements zu gewährleisten, müssen konstruktive Merkmale des Gerätes vorliegen.

Es gibt verschiedene Formen von Testelementen Bekannt sind z.B. im Wesentlichen quadratische Blättchen, die auch als Slides bezeichnet werden, in deren Mitte sich ein mehrschichtiges Testfeld befindet. Diagnostische Testelemente, die streifenförmig ausgebildet sind, werden als Teststreifen bezeichnet. Zur räumlichen Trennung von Detektionszone und Probenaufgabestelle eines Testelements sind im Stand der Technik kapillare Testelemente bekannt, z.B. aus WO 99/29429.

Es ist eine Vielzahl von Verfahren zur Messung der Konzentration von Analyten, zum Beispiel Glukose in einer Blutprobe, bekannt Solche Verfahren fallen üblicherweise in eine der zwei Kategorien: optische Verfahren oder elektrochemische Verfahren.

Optische Verfahren beruhen auf Farbänderungen, die sich im Verlauf der Nachweisreaktion bei Anwesenheit der zu bestimmenden Analyten zeigen. Die Detektion der auf dem Testelement auftretenden Farbänderung kann reflexionsphotometrisch erfolgen. Eine Messung in Transmission ist ebenfalls möglich, setzt jedoch zumindest teilweise transparente Teststreifen voraus.

Elektrochemische Verfahren zur Bestimmung der Konzentration eines Analyten beruhen zum Beispiel auf Amperometrie oder Coulometrie. Solche Verfahren sind beispielsweise aus den Druckschriften US 4,654,197, EP 0 505 475 B1, US 2002/0057993 A1, EP 1 321 769 A1, WO 03/083469 A2 oder US 5,108,564 bekannt. Zur Durchführung der elektrochemischen Analyse müssen zwischen dem Testelement und dem Analysesystem elektrische Signale übertragen werden. Daher muss ein in ein Analysesystem eingebrachtes Testelement in dem Analysesystem mit Hilfe eines elektrischen Anschlusssystems elektrisch kontaktiert werden.

Im Stand der Technik verwendete Testelemente sind meist schichtweise aufgebaut und weisen zur elektrischem Kontaktierung als dünne Schichten ausgeführte Kontaktflächen auf. Bei derzeit kommerziell erhältlichen Analysegeräten schleifen die Kontakte des Geräts während des Einschiebens des Testelements über die Kontakflächen und können diese dabei beschädigen. Es treten ferner Materialanhäufungen an den Kontakten des Analysegerätes auf Somit kann keine zuverlässige Kontaktierung gewährleistet werden.

Aufgabe der vorliegenden Erfindung ist es daher, die genannten Nachteile des Standes der Technik zu vermeiden und ein Analysesystem mit einem elektrischen Anschlusssystem für ein analytisches Testelement und ein Verfahren zum elektrischen Anschließen einer Kontaktfläche eines Testelements in einem Analysesystem bereitzustellen, die eine zuverlässige Kontaktierung des Testelements erlauben. Ferner soll eine abrasive Beschädigung des Testelements durch die elektrischen Kontakte des Analysesystems beim Einschieben des Testelements in das Analysesystem in eine Messposition vermieden werden.

Diese Aufgabe wird erfindungsgemäß gelöst durch ein Analysesystem entsprechend Anspruch 1.

Bei dem erfindungsgemäßen Analysesystem kann es sich zum Beispiel um ein Gerät zur Analyse von Glukose in einer Körperflüssigkeit, insbesondere in Blut, handeln. Die flüssige, zu analysierende Probe wird auf das Testelement gegeben, das gegebenenfalls Reagenzien enthält, die mit Bestandteilen der Probe reagieren. Zur Analyse wird dieses Testelement vor oder nach der Probenaufnahme manuell oder automatisch in eine Messposition in der Testelement-Aufnahme in dem Analysesystem bewegt Die Messposition ist dabei diejenige Position des Testelements in dem Analysegerät, in der die elektrochemische Analyse der auf dem Testelement vorhandenen Probe Stattfindet.

Ein in der Messposition angeordnetes Testelement wird zur elektrochemischen Analyse durch das elektrische Kontaktelement kontaktiert. Dazu wird das elektrische Kontaktelement durch das Mittel zur Bewegung des elektrischen Kontaktelements zu der Kontaktfläche auf dem Testelement hinbewegt und an diese angelegt. Dadurch wird eine elektrische Verbindung des Testelements zu dem Auswertegerät hergestellt. Über diese Verbindung werden elektrische Signale an das Auswertegerät übertragen, aus denen der Glukosegehalt oder der Gehalt eines anderen elektrochemisch detektierbaren Analyten in der auf dem Testelement vorhandenen Probe bestimmt wird (siehe EP-A-1 118 856).

Die elektrische Kontaktierung des Testelements in dem erfindungsgemäßen Analysesystem und in dem erfindungsgemäßen Verfahren hat den Vorteil, dass das Kontaktelement die Kontaktfläche des analytischen Testelements erst dann berührt, wenn das Testelement in der Messposition positioniert ist. Durch das Trennen von Positionieren und Kontaktieren des Testelements wird ein Schleifen oder Kratzen des Kontaktelements über die Kontaktfläche vermieden. Die Elektrodenstruktur des Testelements wird daher nicht beschädigt und eine zuverlässige Kontaktierung gewährleistet. Da annähernd keine Reibung zwischen dem mindestens einen Kontaktelement und der mindestens einen Kontaktfläche stattfindet, können sehr kleine Kontaktflächen eingesetzt werden, so dass ein hohes Miniaturisierungspotential besteht. Auch beim Entfernen des Testelements mit der Probe aus der Messposition nach der Analyse besteht bei dem erfindungsgemäßen Analysesystem oder dem erfindungsgemäßen Verfahren eine geringere Kontaminationsgefahr des Kontaktelements durch die Probe, da dieses vor dem Entfernen wieder von dem Testelement getrennt wird. Das Andrücken des elektrischen Kontaktelements an die Kontaktfläche kann bei der Kontaktierung des Testelements erst nach dem Positionieren in der Messposition mit einer hohen Kontaktkraft erfolgen, so dass eine sichere Kontaktierung und gegebenenfalls eine zusätzliche Fixierung des Testelements durch das Kontaktelement gewährleistet ist

Die Erfindung bezieht sich auf ein Analysesystem mit einem elektrischen Anschlusssystem für ein analytisches Testelement, wobei das Testelement mindestens eine Kontaktfläche aufweist. Das Analysesystem umfasst einen in einem Gehäuse zwischen einer Anfangs- und einer Endposition verschiebbaren Schieber, der einen Aufnahmeraum mit einer Eingangsotmung zur Aufnahme des Testelements enthält, wobei der Aufnahmeraum durch einen Anschlag begrenzt ist und mindestens ein (gegebenenfalls an dem Schieber montiertes) Kontaktelement, das so angeordnet ist, dass es in der Anfangsposition des Schieben von der Kontaktfläche eines in dem Aufnahmeraum aufgenommenen Testelements beabstandet ist und dass es durch ein Verschieben des Schiebers aus der Anfangs- in die Endposition zu der Kontaktfläche hin bewegt und auf die Kontaktfläche gedrückt wird. Das erfindungsgemäße Analysesystem umfasst ferner eine elektrochemische Auswerteschaltung, die zumindest in der Endposition des Schiebers mit dem Kontaktelement elektrisch verbunden ist. Dabei dient der Schieber als Testelement-Aufnahme. Beim Verschieben des Schiebers wirkt ein Mittel zum Bewegen des elektrischen Kontaktelements auf das elektrische Kontaktelement und bewegt dieses zu der Kontaktfläche hin. Die elektrochemische Auswerteschaltung ist in einem in dem Analysegerät enthaltenen Auswertegerät angeordnet.

Zur Analyse einer flüssigen Probe auf einem Testelement wird in dieser Ausführungsform des Analysesystems das Testelement in die Testelement-Aufnahme durch die Eingangsöffnung in den Aufnahmeraum des Schiebers eingeschoben, der sich in seiner Anfangsposition befindet. Die Eingangsöffnung ist beispielsweise bei Verwendung eines streifenformigen Testelements als länglicher Schlitz ausgebildet. Der Aufnahmeraum ist ein in dem Schieber ausgebildeter Hohlraum, in den das Testelement bis zum Erreichen des Anschlags eingeschoben werden kann. In der Anfangsposition des Schiebers ist ein daran montiertes Kontaktelement von der Kontaktfläche des Testelements beabstandet. Beim Einschieben des Testelements in den Schieber berührt das Kontaktelement das Testelement nicht Daraus ergibt sich der Vorteil, dass das Kontaktelement das Testelement beim Einschieben nicht mechanisch beschädigen kann.

Sobald das Testelement bis zum Anschlag in den Schieber eingeführt wurde, wird der Schieber durch die weiterhin in Einschubrichtung aufrechterhaltene Kraft aus der Anfangsin die Endposition mitbewegt- Vorzugsweise wird das Testelement während der Bewegung des Schiebers aus der Anfangs- in die Endposition in dem Aufnahmeraum eingeklemmt, so dass eine Änderung seiner Position relativ zu dem Schieber verhindert wird. Die Endposition des Schiebers kann zum Beispiel durch einen weiteren, die Bewegung des Schlittens begrenzenden Anschlag definiert sein. Durch das Verschieben des Schiebers aus der Anfangs- in die Endposition bewegt sich das Kontaktelement zu der Kontaktfläche hin und wird auf die Kontaktfläche gedrückt, so dass eine elektrische Kontaktierung des Testelements erreicht wird.

Bei der Bewegung des Schiebers aus seiner Anfangs- in seine Endposition verschiebt sich das Testelement in dem Schieber in Bezug auf den Schieber und das Kontaktelement nicht Es bleibt in unveränderter Position in dem Aufnahmeraum des Schiebers an dem Anschlag anliegend angeordnet. Daher wird eine elektrische Kontaktierung mit dem gegen das Testelement gedrückten, mit dem Schieber mitbewegten, daran montierten Kontaktelement hergestellt, unter Vermeidung eines Gleitens des Testelements über das Kontaktelement und einer daraus resultierenden Beschädigung des Testelements oder Materialansammlung an dem Kontaktelement.

In der Endposition kann eine elektrochemische Analyse der auf dem Testelement befindlichen Probe erfolgen. Dazu dient die elektrochemische Auswerteschaltung, die zumindest in der Endposition des Schiebers mit dem Kontaktelement elektrisch verbunden ist. Diese elektrische Verbindung kann durch das Bewegen des Schiebers in die Endposition hergestellt werden. Die Auswerteschaltung kann aber auch ständig mit dem Kontaktelement elektrisch verbunden sein.

Die elektrochemische Auswerteschaltung dient z.B. zur Auswertung von gemessenen elektrischen Signalen, die von der Konzentration eines Analyten auf dem kontaktierten Testelement abhängen. Solche elektrochemischen Auswerteschaltungen sind im Stand der Technik bekannt, beispielsweise aus EP-B1 0505475 oder aus US 5,108,564.

In einer bevorzugten Ausführungsform der vorliegenden Erfindung ist das Kontaktelement in der Anfangsposition des Schiebers gegenüber einem darin enthaltenen Testelement versenkt in einer Vertiefung im Aufnahmeraun des Schiebers angeordnet. Durch das Versenken des Kontaktelements wird erreicht, dass es in der Anfangsposition des Schiebers (insbesondere beim Einschieben des Testelements in den Aufnahmeraum) von der Oberfläche des Testelements beabstandet ist.

Vorzugsweise ist in dem Aufnahmeraum eine Einklemmeinrichtung so angeordnet, dass sie ein bis zu dem Anschlag in den Schieber eingeführtes Testelement in dem Aufnahmeraum fixiert.

Vorzugsweise erstreckt sich das Kontaktelement durch eine Öffnung des Schiebers von dem innen angeordneten Aufnahmeraum zu der Außenseite des Schiebers, wobei das Kontaktelement so angeordnet ist, dass es auf der Außenseite des Schiebers mit einem Andruckelement zusammenwirkt. Das Andruckelement weist in einer bevorzugten Ausführungsform der vorliegenden Erfindung eine Führungsfläche auf, die so angeordnet ist, dass sie das Kontaktelement beim Verschieben des Schiebers von seiner Anfangs- in seine Endposition in den Aufnahmeraum hinein zu der Kontaktelement eines darin enthaltenen Testelements hindrückt Beim Verschieben des Schiebers aus der Anfangs- in die Endposition führt die Führungsfläche des außerhalb des Schiebers angeordneten Andruckelements das sich durch die Öffnung zur Außenseite des Schiebers erstreckende Kontaktelement so, dass es auf der Innenseite in den Aufnahmeraum hineingedrückt wird, bis ein elektrischer Kontakt mit dem Testelement hergestellt ist. Dabei ist die Führungsfläche vorzugsweise rampenförmig geformt, wobei sie eine gebogene Fläche oder eine schiefe Ebene umfasst.

Die elektrischen Anschlüsse der elektrochemischen Auswerteschaltung in dem Analysegerät können direkt mit dem Kontaktelement verbunden sein. Sie können aber auch mit dem Andruckelement verbunden sein, das dann elektrisch leitfähig sein muss, um beim Zusammenwirken mit dem Kontaktelement eine elektrische Kontaktierung des Testelements zu erreichen.

In einer bevorzugten Ausführungsform der vorliegenden Erfindung ist das Andruckelement elastisch und in der Endposition des Schiebers so elastisch verformt, dass es das Kontaktelement mit einer zusätzlichen Kraft gegen die Kontaktfläche des Testelements drückt, Durch eine beim Drücken auf das Kontaktelement entstehende elastische Verformung, zum Beispiel Biegung, des Andruckelements wirkt eine der verformenden Kraft entgegengesetzte Kraft auf das Kontaktelement, die das Kontaktelement gegen die Kontaktfläche des Testelements drückt.

Ferner kann das Kontaktelement selbst elastisch sein, Dann wird das Kontaktelement, vorzugsweise während eine elektrische Kontaktierung des Testelements besteht, elastisch so verformt, dass es mit einer (ggf. der verformenden Kraft entgegengesetzten) Kraft gegen die Kontaktfläche drückt.

Die Erfindung bezieht sich weiterhin auf ein elektrisches Anschlusssystem für ein analytisches Testelement in einem Analysesystem, wobei das Testelement mindestens eine Kontaktfläche aufweist. Das elektrische Anschlusssystem umfasst einen in einem Gehäuse zwischen einer Anfangs- und einer Endposition verschiebbaren Schieber, der einen Aufnahmeraum mit einer Eingangsöffnung zur Aufnahme des Testelements enthält, wobei der Aufnahmeraum durch einen Anschlag begrenzt ist. Es umfasst weiterhin mindestens ein Kontaktelement, das so angeordnet ist, dass es in der Anfangsposition des Schiebers von der Kontaktfläche eines in dem Anfnanmeraum aufgenommenen Testelements beabstandet ist und dass es durch ein Verschieben des Schiebers aus der Anfangs- in die Endposition zu der Kontaktfläche hinbewegt und auf die Kontakfläche gedrückt wird.

Die oben bezüglich des erfindungsgemäßen elektrischen Anschlusssystems und des erfindungsgemäßen Analysesystems getroffenen Aussagen gelten (soweit anwendbar) ebenso für die erfindungsgemäßen Verfahren.

Die Erfindung betrifft weiterhin ein Verfahren zum elektrischen Anschließen einer Kontaktfläche eines Testelements in einem Analysesystem mit den Schritten
A) Einschieben des Testelements bis zu einem Anschlag in einen Aufnahmeraum eines in einem Gehäuse zwischen einer Anfangs- und einer Endposition verschiebbar angeordneten Schiebers, wobei
   - sich der Schieber in der Anfangsposition befindet und
   - ein mit dem Schieber verbundenes Kontaktelement von der Kontaktfläche des Testelements beabstandet ist und
B) Verschieben des Schiebers mit dem darin enthaltenen Testelement aus der Anfangsin die Endposition, wobei das Kontaktelement zu der Kontaktfläche des Testelements hinbewegt und auf die Kontaktfläche gedrückt wird.

Anhand der Zeichnung wird die Erfindung nachstehend näher erläutert.

Es zeigen:
- Figur 1: eine schematische Darstellung einer Ausführungsform eines in einem erfindungsgemäßen Analysesystem enthaltenen elektrischen Anschlusssystems für ein Testelement,
- Figuren 2A bis 2C: in drei Schritten die Kontaktierung eines Testelements in einem elektrischen Anschlusssystem gemäß Figur 1,
- Figur 3: eine schernatische Darstellung einer zweiten Ausführungsform eines erfindungsgemäßen Analysesystems und die Kontaktierung eines darin enthaltenen Testelements,
- Figur 4: eine schematische Darstellung einer dritten A eines erfindungsgemäßen Analysesystems und die Kontaktierung eines darin enthaltenen Testelements,
- Figur 5: eine schematische Darstellung einer vierten A eines erfindungsgemäßen Analysesystems und die Kontaktierung eines darin enthaltenen Testelements.

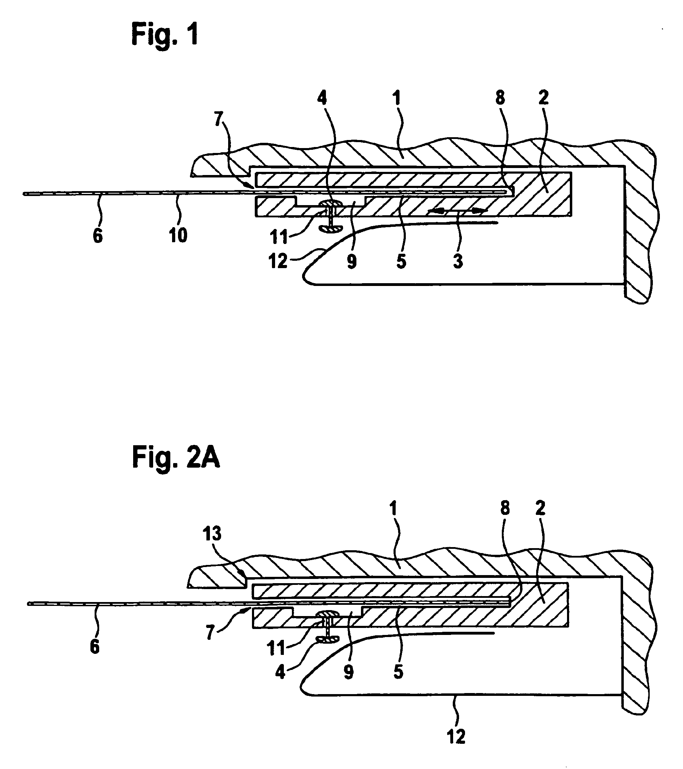

Figur 1 zeigt eine besondere Ausführungsform eines in einem erfindungsgemäßen Analysesystem enthaltenen elektrischen Anschlusssystems.

In einem Gehäuse 1 ist ein als Testelement-Aufnahme gestalteter Schieber 2 angeordnet. Der Schieber 2 ist in der durch den Doppelpfeil 3 angedeuteten Bewegungsrichtung in dem Gehäuse 1 verschiebbar. An dem Schieber 2 ist ein elektrisches Kontaktelement 4 montiert, das bei einer Bewegung des Schiebers 2 in Bewegungsrichtung 3 mitbewegt wird. Der in Figur 1 dargestellte Schieber 2 befindet sich in seiner Anfangsposition. Er enthält einen Aufnahmeraum 5 zur Aufnahme eines Testelements 6. Der Aufnahmeraum 5 erstreckt sich in dem Schieber 2 von der (schlitzförmigen) Eingangsöffnung 7 bis zu einem Anschlag 8. Das Testelement 6 wird in der Anfangsstellung des Schiebers 2 durch die Öffnung 7 bis zum Anschlag 8 in den Aufnahmeraum 5 eingeschoben. In der Anfangsposition des Schiebers 2 ist das Kontaktelement 4 gegenüber dem Testelement 6 in einer Vertiefung 9 im Aufnahmeraum 5 versenkt angeordnet Das Kontaktelement 4 ist dadurch zu dem Testelement 6 beabstandet und berührt dieses nicht. Das Testelement 6 weist (in Figur 1 auf seiner Unterseite 10) mindestens eine Kontaktfläche auf, die bei dem bis zum Anschlag 8 in den Aufnahmeraum 5 des Schiebers 2 eingeschobenen Testelement 6 direkt gegenüber dem Kontaktelement 4 angeordnet ist.

Das Kontaktelement 4 erstreckt sich durch eine Öffnung 11 des Schiebers 2 von dem innen angeordneten Aufnahmeraum 5 bis zu der Außenseite des Schiebers 2. Auf der Außenseite des Schiebers 2 ist als Mittel zum Bewegen des Kontaktelements ein Andruckelement 12 vorgesehen, das mit dem Kontaktelement 4 zusammenwirkt, wie in Bezug auf die Figuren 2A bis 2C im Folgenden näher erläutert wird.

Figuren 2A bis 2C zeigen in drei Schritten, wie die Kontaktierung der mindestens einen Kontaktfläche eines Testelements in dem elektrischen Anschlusssystem gemäß Figur 1 abläuft.

Figur 2A zeigt den Schieber 2 in Anfangsposition in dem Gehäuse 1. Der Schieber 2 liegt dabei an einem ersten Anschlag 13 in dem Gehäuse 1 an. Das Kontaktelement 4 ist versenkt in der Vertiefung 9 in dem Aufnahmeraum 5 angeordnet. Ein Testelement 6 wird in den Aufnahmeraum 5 durch die Eingangsöffnung 7 eingeschoben, bis es an den Anschlag 8 anstößt. Dabei verbleibt der Schieber 2 in seiner Anfangsposition. Die beabstandete (versenkte) Anordnung des Kontaktelements 4 in dem Aufnahmeraum 5 verhindert ein Gleiten des Testelements 6 über das Kontaktelement 4 beim Einschieben in den Aufnahmeraum 5 und eine dabei möglicherweise auftretende Beschädigung des Testelements 6 oder Verschmutzung des Kontaktelements 4. Des Weiteren erstreckt sich das Kontaktelement 4 durch die Öffnung 11 des Schiebers 2 nach außen, ist jedoch beabstandet zu dem Andruckelement 12.

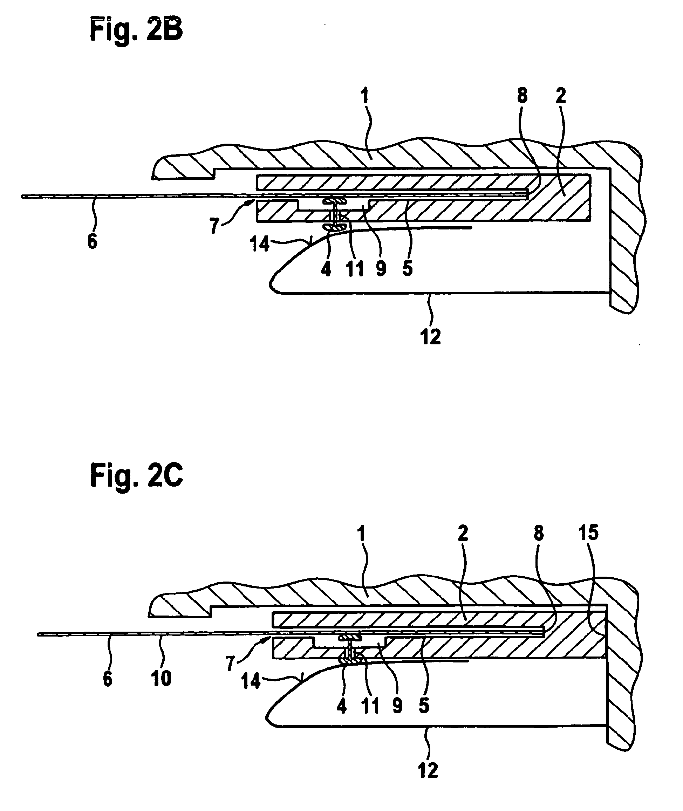

Figur 2B zeigt den Schieber 2 in einer Position in dem Gehäuse 1., die zwischen der Anfangs- und der Endposition liegt. Nachdem das Testelement 6, wie in Figur 2A gezeigt, bis zum Anschlag 8 in den Schieber 2 eingeführt wurde, wird der Schieber 2 durch eine fortbestehende manuelle oder automatische Krafteinwirkung in Einschubrichtung gemeinsam mit dem Testelement 6 auf seine Endposition zubewegt. Dabei wirkt das Kontaktelement 4 mit dem Andruckelement 12 derart zusammen, dass es, sobald es das Andruckelement 12 erreicht, über eine rampenförmige gebogene Führungsfläche 14 des Andruckelements 12 gleitet und durch diese durch die Öffnung 11 in den Aufnahmeraum 5 hinein zu der Kontaktfläche des Testelements 6 gedrückt wird. Das Kontaktelement 4 wird dabei im Wesentlichen senkrecht zur Kontaktfläche verschoben. Durch die Lagerung des Kontaktelements 4 in dem Schieber 2 wird hingegen keine zu der Oberfläche des Testelements 6 parallele Relativbewegung des Kontaktelements 4 erzeugt, die in einer Beschädigung der Oberfläche resultieren könnte. Beim Einschieben des Schiebers 2 wird das Testelement 6 vorzugsweise durch eine (nicht dargestellte) Einklemmeinrichtung in dem Aufnahmeraum 5 am Anschlag 8 anliegend fixiert, so dass es sich beim Einschieben des Schiebers 2 nicht in diesem bewegt.

Figur 2C zeigt den Schieber 2 in Endposition in dem Gehäuse 1. Die Endposition wird durch einen zweiten Anschlag 15 für den Schieber 2 in dem Gehäuse 1 definiert und stellt die Messposition für das am Anschlag 8 des Aufnahmeraums 5 des Schiebers 2 anliegende Testelement dar. Das Kontaktelement 4 ist gegen die auf der Unterseite 10 des Testelements 6 vorhandene Kontaktfläche gedrückt, so dass ein elektrischer Kontakt hergestellt ist. Das Andruckelement 12 besteht aus einem elastischen Material. Daher ist es in der in Figur 2C dargestellten Endposition durch das gegen das Testelement 6 drückende Kontaktelement 4 nach unten gebogen, so dass es eine entsprechende Gegenkraft auf das Kontaktelement 4 nach oben (gegen das Kontaktelement 4) ausübt.

Nach erfolgter Analyse mit Hilfe einer (nicht dargestellten) elektrochemischen Auswerteschaltung, die sich in einem (nicht dargestellten) Auswertegerät befindet wird das Testelement 6 in Richtung der Anfangsposition des Schiebers 2 gezogen. Dadurch wird der Schieber 2 gemeinsamen mit dem darin fixierten Testelement 6 bis zu seinem ersten Anschlag 13 bewegt und anschließend das Testelement 6 aus seinem Aufnahmeraum 5 herausgezogen, wobei das Kontaktelement 4 wieder wie in Figur 2A gegenüber dem Testelement 6 in der Vertiefung 9 versenkt ist. Das elektrische Anschlusssystem befindet sich wieder in seiner Ausgangsposition, bereit für den nächsten Kontaktierungsvorgang.

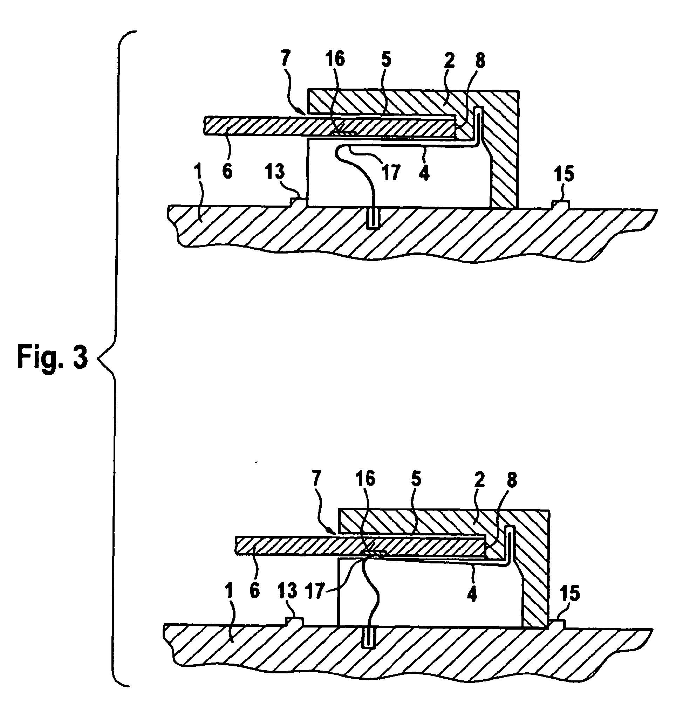

Figur 3 zeigt eine schematische Darstellung einer zweiten Ausführungsform eines elektrischen Anschlusssystems in einem erfindungsgemäßen Analysesystem und die Kontaktierung eines darin enthaltenen Testelements.

Das elektrische Anschlusssystem weist ein Gehäuse 1 auf, in dem ein Schieber 2 (Testelement-Aufnahme) zwischen einer Aufangsposition (Figur 3 oben) und einer Endposition (Figur 3 unten) verschiebbar ist. Der Schieber 2 enthält einen Anfnahmeraum 5 mit einer Eingangsöffnung 7, in dem in Figur 3 ein Testelement 6 aufgenommen ist. Der Aufnahmeraum 5 ist durch einen Anschlag 8 begrenzt. Das in Figur 3 dargestellte elektrische Anschlusssystem umfasst ferner ein elektrisches Kontaktelement 4, das in der Anfangsposition (Figur 3 oben) des Schiebers 2 von der Kontaktfläche 16 des Testelements 6 beabstandet ist In der Anfangsposition liegt der Schieber 2 an einem ersten Anschlag 13 an. Das Kontaktelement 4 weist mehrere Biegungen auf und ist mit einem Ende am Gehäuse 1 und mit dem ändern Ende am Schieber 2 befestigt. Bei einem manuellen oder automatischen Verschieben des Schiebers 2 mit einem darin enthaltenen Testelement 6 aus der Anfangsposition (Figur 3 oben) in die Endposition (Figur 3 unten), wird das Kontaktelement 4 elastisch verformt. Die elastische Verformung wird dadurch erzeugt, dass das an dem Schieber 2 befestigte Ende des Kontaktelements 4 mit dem Schieber 2 relativ zu dem Gehäuse 1 mitbewegt wird und das an dem Gehäuse 1 befestigte Ende seine Position nicht ändert. Durch die elastische Verformung des Kontaktelements 4 bewegt sich ein nahe der Kontaktfläche 16 des Testelements 6 angeordneter Teilbereich 17 des Kontaktelements 4 zu der Kontaktfläche 16 hin und wird in der Endposition des Schiebers 2 auf die Kontaktfläche 16 gedrückt, wodurch in der Messposition eine elektrische Kontaktierung hergestellt wird. Der Schieber 2 selbst dient also als Mittel zum Bewegen des Kontaktelements 4. In der Endposition (Figur 3 unten) liegt der Schieber 2 an einem zweiten Anschlag 15 an. Bei einer Bewegung des Schiebers 2 aus der End- zurück in die Anfangsposition wird die Bewegung des Kontaktelements 4 umgekehrt und die elektrische Kontaktierung wieder aufgehoben.

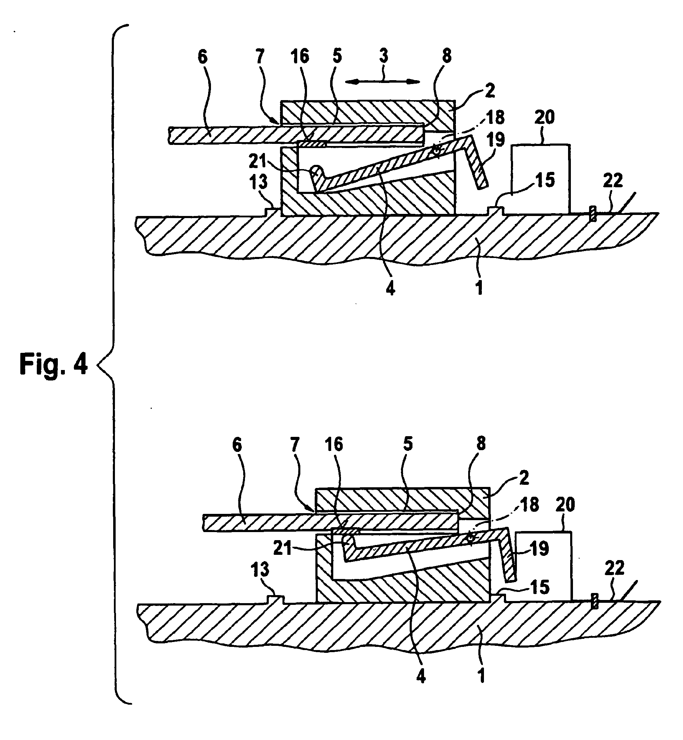

Figur 4 zeigt eine dritte Ausführungsform eines elektrischen Anschlusssystems in einem erfindungsgemäßen Analysesystem und die elektrische Kontaktierung eines darin enthaltenen Testelements.

Das elektrische Anschlusssystem umfasst ein Gehäuse 1 und einen als Testelement-Aufnahme vorgesehenen Schieber 2, der zwischen einer Anfangsposition (Figur 4 oben) und eine Endposition (Figur 4 unten) verschiebbar ist (Bewegungsrichtung 3). Dabei bewegt sich der Schieber 2 von einem ersten Anschlag 13 zu einem zweiten Anschlag 15. In einem Aufnahmeraum 5 mit einer Eingangsöffnung 7 und einem Anschlag 8 ist ein Testelement 6 angeordnet. Ein um eine Achse 18 drehbar gelagertes elektrisches Kontaktelement 4 ist an dem Schieber 2 montiert Das Testelement 6 weist eine Kontaktfläche 16 auf. Das (z-förmige) Kontaktelement 4 stößt in der Endposition des Schiebers 2 mit einem Ende 19 an einen elektrischen Kontakt 20. Der elektrische Kontakt 20 dient als Mittel zum Bewegen des Kontaktelements und drückt so auf das Ende 18 des Kontaktelements 4, dass das Kontaktelement 4 durch eine Drehbewegung um die Achse 18 mit seinem anderen Ende 21 zu der Kontaktfläche 16 des in der Messposition in dem Schieber aufgenommenen Testelements 6 hinbewegt wird und diese elektrisch kontaktiert. Die elektrische Kontaktierung besteht dann zwischen der Kontaktfläche 16 des Testelements 6, dem Kontaktelement 4 und dem Kontakt 20, der zum Beispiel mit elektrischen Leitungen 22 einer (nicht dargestellten) elektrochemischen Auswerteschaltung in dem Auswertegerät des Analysesystems verbunden ist.

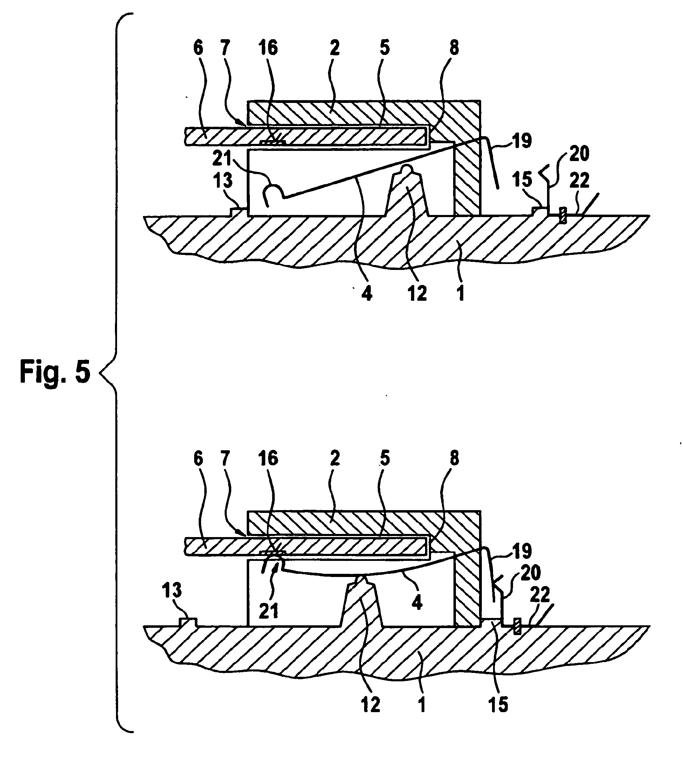

Figur 5 zeigt eine vierte Ausführungsform eines elektrischen Anschlusssystems in einem erfindungsgemäßen Analysesystem und die Kontaktierung eines darin enthaltenen Testelements.

In einem Gehäuse 1 ist ein zwischen einer Anfangsposition (Figur 5 oben) und einer Endposition (Figur 5 unten) zwischen zwei Anschlägen 13, 15 verschiebbarer Schieber 2 (Testelement-Aufnahme) angeordnet. Der Schieber 2 enthält ein Testelement 6 in einem Aufnahmeraum 5, der eine Eingangsffnung 7 und einen Anschlag 8 anfweist. Ein Kontaktelement 4 ist mit dem Schieber 2 verbunden und ist in der Anfangsposition von der Kontaktfläche 16 des Testelements 6 beabstandet. Bei einem Verschieben des Schiebers 2 in die Endposition (Figur 5 unten) gleitet das Kontaktelement 4 entlang eines Andruckelements 12, das mit dem Gehäuse 1 verbunden ist. Dadurch wird das Kontaktelement 4 so elastisch verformt, dass sich sein eines Ende 21 zu der Kontaktfläche 16 des Testelements 6 hinbewegt und in der Endposition durch das als Mittel zur Bewegung des Kontaktelements vorgesehene Andruckelement 12 durch eine Öffnung in der Auflagefläche des Testelements 6 auf die Kontaktfläche 16 gedrückt wird, so dass eine elektrische Kontaktierung hergestellt wird. In der Endposition des Schiebers 2 liegt ein über den Schieber 2 herausragendes Ende 19 des Kontaktelements 4 an einem elektrischen Kontakt 20 an. Die elektrische Kontaktierung besteht dann zwischen der Kontaktfläche 16 des Testelements 6, dem Kontaktelement 4 und dem Kontakt 20, der zum Beispiel mit elektrischen Leitungen 22 einer (nicht dargestellten) elektrochemischen Auswerteschaltung eines Analysesystems verbunden ist

### Bezueszeichenliste

- 1: Gehäuse
- 2: Schieber
- 3: Bewegungsrichtung des Schiebers
- 4: Kontabelement
- 5: Aufnahmeraum
- 6: Testelement
- 7: Eingangsöffnung
- 8: Anschlag für das Testelement
- 9: Vertiefung
- 10: Unterseite des Testelements
- 11: Öffnung
- 12: Andruckelement
- 13: erster Anschlag für den Schieber
- 14: Führungsfläche
- 15: zweiter Anschlag für den Schieber
- 16: Kontaktfläche
- 17: Teilbereich des Kontaktelements
- 18: Achse
- 19: ein Ende des Kontaktelements
- 20: elektrischer Kontakt
- 21: anderes Ende des Kontaktelements
- 22: elektrische Leitungen

## Patentansprüche

1. Analysesystem mit einem elektrischen Anschlusssystem für ein analytisches Testelement (6), wobei das Testelement (6) mindestens eine Kontaktfläche (16) aufweist, **gekennzeichnet durch**
• einen in einem Gehäuse (1) zwischen einer Anfangs- und einer Endposition verschiebbaren Schieber (2), der einen Aufnahmeraum (5) mit einer Eingangsöffnung (7) zur Aufnahme des Testelements (6) enthält, wobei der Aufnahmeraum (5) **durch** einen Anschlag (8) begrenzt ist,
• mindestens ein Kontaktelement (4), das so angeordnet ist, dass es in der Anfangsposition des Schiebers (2) von der Kontaktfläche (16) eines in dem Aufnahmeraum (5) aufgenommenen Testelements (6) beabstandet ist und dass es **durch** ein Verschieben des Schiebers (2) aus der Anfangs- in die Endposition zu der Kontaktfläche (16) hinbewegt und auf die Kontaktfläche (16) gedrückt wird und
• eine elektrochemische Auswerteschaltung, die zumindest in der Endposition des Schiebers (2) mit dem Kontaktelement (4) elektrisch verbunden ist.

2. Analysesystem gemäß Anspruch 1, **dadurch gekennzeichnet, dass** das Kontaktelement (4) an dem Schieber (2) montiert ist.

3. Analysesystem gemäß einem der Ansprüche 1 oder 2, **dadurch gekennzeichnet, dass** das Kontaktelement (4) in der Anfangsposition des Schiebers (2) gegenüber einem darin enthaltenen Testelement (6) versenkt in einer Vertiefung (9) in dem Aufnahmeraum (5) des Schiebers (2) angeordnet ist.

4. Analysesystem gemäß einem der Ansprüche 1 bis 3, **dadurch gekennzeichnet, dass** sich das Kontaktelement (4) durch eine Öffnung (11) des Schiebers (2) von dem innen angeordneten Aufnahmeraum (5) zu der Außenseite des Schiebers (2) erstreckt, wobei das Kontaktelement (4) so angeordnet ist, dass es auf der Außenseite des Schiebers (2) mit einem Andruckelement (12) zusammenwirkt.

5. Analysesystem gemäß Anspruch 4, **dadurch gekennzeichnet, dass** das Andruckelement (12) eine Führungsfläche (14) aufweist, die so angeordnet ist, dass sie das Kontaktelement (4) beim Verschieben des Schiebers (2) von seiner Anfangsin seine Endposition in den Aufnahmeraum (5) hinein, zu der Kontaktfläche (16) eines darin enthaltenen Testelements (6) hin drückt.

6. Analysesystem gemäß Anspruch 5, **dadurch gekennzeichnet, dass** die Führungsfläche (14) rampenförmig geformt ist, wobei sie eine gebogene Fläche oder eine schiefe Ebene umfasst.

7. Analysesystem gemäß einem der Ansprüche 4 bis 6, **dadurch gekennzeichnet, dass** das Andruckelement (12) elektrisch leitfähig ist.

8. Analysesystem gemäß einem der Ansprüche 4 bis 7, **dadurch gekennzeichnet, dass** das Andruckelement (12) elastisch ist und in der Endposition des Schiebers (2) so elastisch verformt ist, dass es das Kontaktelement (4) mit einer zusätzlichen Kraft gegen die Kontaktfläche (16) des Testelements (6) drückt.

9. Analysesystem gemäß einem der Ansprüche 1 bis 8, **dadurch gekennzeichnet, dass** das Kontaktelement (4) elastisch ist.

10. Verfahren zum elektrischen Anschließen einer Kontaktfläche eines Testelements (6) in einem Analysesystem mit den Schritten:
A) Einschieben des Testelements (6) bis zu einem Anschlag (8) in einen Aufnahmeraum (5) eines in einem Gehäuse (1) zwischen einer Anfangs- und einer Endposition verschiebbar angeordneten Schiebers (2), wobei sich der Schieber (2) in der Anfangsposition befindet und
ein Kontaktelement (4) von der Kontaktfläche (16) des Testelements (6) beabstandet ist und
B) Verschieben des Schiebers (2) mit dem darin enthaltenen Testelement (6) aus der Anfangs- in die Endposition, wobei das Kontaktelement (4) zu der Kontaktfläche (16) des Testelements (6) hinbewegt und auf die Kontaktfläche (16) gedrückt wird.

## Claims

1. An analysis system with an electrical connection system for an analytical test element (6), wherein the test element (6) has at least one contact surface (16), **characterized by**
• a slide (2) which can be moved between an initial position and an end position in a housing (1), which contains a holding space (5) with an inlet opening (7) for holding the test element (6), wherein the holding space (5) is bounded by a stop (8),
• at least one contact element (4), which is arranged such that, when the slide (2) is in the initial position, it is at a distance from the contact surface (16) of a test element (6) which is held in the holding space (5), and such that it is moved from the initial position to the end position towards the contact surface (16) by movement of the slide (2), and is pressed against the contact surface (16), and
• an electrochemical evaluation circuit which is electrically connected to the contact element (4), at least in the end position of the slide (2).

2. The analysis system as claimed in claim 1, wherein the contact element (4) is mounted on the slide (2).

3. The analysis system as claimed in one of claims 1 or 2, wherein, when the slide (2) is in the initial position, the contact element (4) is arranged recessed with respect to a test element (6) contained in it, in a depression (9) in the holding space (5) in the slide (2) .

4. The analysis system as claimed in one of claims 1 to 3, wherein the contact element (4) extends through an opening (11) in the slide (2) from the internally arranged holding space (5) to the outside of the slide (2), wherein the contact element (4) is arranged such that it interacts with a contact-pressure element (12) on the outside of the slide (2).

5. The analysis system as claimed in claim 4, wherein the contact-pressure element (12) has a guide surface (14) which is arranged such that it pushes the contact element (4) into the holding space (5), towards the contact surface (16) of a test element (6) contained in it, during movement of the slide (2) from its initial position to its end position.

6. The analysis system as claimed in claim 5, wherein the guide surface (14) is in the form of a ramp and has a curved surface or an inclined plane.

7. The analysis system as claimed in one of claims 4 to 6, wherein the contact-pressure element (12) is electrically conductive.

8. The analysis system as claimed in one of claims 4 to 7, wherein the contact-pressure element (12) is elastic and is elastically deformed in the end position of the slide (2) such that it presses the contact element (4) against the contact surface (16) of the test element (6) with an additional force.

9. The analysis system as claimed in one of claims 1 to 8, wherein the contact element (4) is elastic.

10. A method for electrical connection of a contact surface of a test element (6) in an analysis system, having the following steps:
A) insertion of the test element (6) as far as a stop (8) in a holding space (5) in a slide (2) which is arranged in a housing (1) such that it can be moved between an initial position and an end position, wherein the slide (2) is located in the initial position, and
a contact element (4) being at a distance from the contact surface (16) of the test element (6), and
B) movement of the slide (2) with the test element (6) contained in it from the initial position to the end position, wherein the contact element (4) is moved towards the contact surface (16) of the test element (6), and is pressed against the contact surface (16).

## Revendications

1. Système d'analyse avec un système de connexion électrique pour un élément de test analytique (6) dans lequel l'élément de test (6) comporte au moins une surface de contact (16), **caractérisé par**
- un coulisseau (2) coulissant dans un boîtier (1) entre une position de début et une position de fin, qui contient un espace d'accueil (5) avec une ouverture d'entrée (7) pour accueillir l'élément de test (6), l'espace d'accueil (5) étant limité par une butée (8),
- au moins un élément de contact (4) disposé de telle sorte que dans la position de début du coulisseau (2), un élément de test (6) logé dans l'espace d'accueil (5) est à une distance de la surface de contact (16) et qu'il se déplace par un coulissement du coulisseau (2) de la position de début à la position de fin vers la surface de contact (16) et qu'il est poussé sur la surface de contact (16) et
- un circuit d'évaluation électrochimique relié électriquement au moins dans la position de fin du coulisseau (2) avec l'élément de contact (4).

2. Système d'analyse selon la revendication 1, **caractérisé en ce que** l'élément de contact (4) est monté sur le coulisseau (2).

3. Système d'analyse selon une des revendications 1 ou 2, **caractérisé en ce que** dans la position de début du coulisseau (2), l'élément de contact (4) est disposé enfoncé dans un creux (9) de l'espace d'accueil (5) en face d'un élément de test (6) contenu dans le coulisseau (2).

4. Système d'analyse selon une des revendications 1 à 3, **caractérisé en ce que** l'élément de contact (4) s'étend à travers une ouverture (11) du coulisseau (2) depuis l'espace d'accueil (5) disposé à l'intérieur vers l'extérieur du coulisseau (2), l'élément de contact (4) étant disposé de telle sorte qu'il agit à l'extérieur du coulisseau (2) de concert avec un élément de serrage (12).

5. Système d'analyse selon la revendication 4, **caractérisé en ce que** l'élément de serrage (12) comporte une surface de guidage (14) disposée de manière à pousser l'élément de contact (4) vers l'intérieur de l'espace d'accueil (5), vers la surface de contact (16) d'un élément de test (6) qu'il contient, lors du coulissage du coulisseau (2) de sa position de début à sa position de fin.

6. Système d'analyse selon la revendication 5, **caractérisé en ce que** la surface de guidage (14) a une forme de rampe comportant une surface cambrée ou un plan oblique.

7. Système d'analyse selon une des revendications 4 à 6, **caractérisé en ce que** l'élément de serrage (12) est électriquement conducteur.

8. Système d'analyse selon une des revendications 4 à 7, **caractérisé en ce que** l'élément de serrage (12) est élastique et qu'en position de fin du coulisseau (2) il est élastiquement déformé au point de pousser l'élément de contact (4) avec une force supplémentaire contre la surface de contact (16) de l'élément de test (6).

9. Système d'analyse selon une des revendications 1 à 8, **caractérisé en ce que** l'élément de contact (4) est élastique.

10. Procédé pour la connexion électrique d'une surface de contact d'un élément de test (6) dans un système d'analyse avec les étapes :
A) insertion de l'élément de test (6) jusqu'à une butée (8) dans un espace d'accueil (5) d'un coulisseau (2) disposé de manière coulissante dans un boîtier (1) entre une position de début et une position de fin, le coulisseau (2) se trouvant dans la position de début et
un élément de contact (4) de l'élément de test (6) est à une distance de la surface de contact (16) et
B) coulissement du coulisseau (2) avec l'élément de test (6) qu'il contient de la position de début à la position de fin, l'élément de contact (4) se déplaçant vers la surface de contact (16) de l'élément de test (6) et étant poussé sur la surface de contact (16).
